# EUROPÄISCHE PATENTSCHRIFT

(11) **EP 3 453 030 B1**
(45) Veröffentlichungstag und Bekanntmachung des Hinweises auf die Patenterteilung: **04.03.2020**
(21) Anmeldenummer: 17726838.0
(22) Anmeldetag: 03.05.2017
(51) Int. Cl.: G21C 17/035, G21C 15/18, G01F 23/24

(54) **PASSIVES FÜLLSTANDSREGELSYSTEM**
PASSIVE FILL-LEVEL CONTROL SYSTEM
SYSTÈME DE RÉGULATION DU NIVEAU DE REMPLISSAGE PASSIF

(30) Priorität: 06.05.2016 DE 102016207832
(43) Veröffentlichungstag der Anmeldung: 13.03.2019
(73) Patentinhaber: Framatome GmbH, 91052 Erlangen (DE)
(72) Erfinder: PUSSEL, Andreas, 63820 Elsenfeld (DE)
(74) Vertreter: Lavoix
(86) Internationale Anmeldenummer: PCT/EP2017/060513
(87) Internationale Veröffentlichungsnummer: WO 2017/191180

(56) Entgegenhaltungen:
- DE-A1- 3 210 745
- DE-B- 1 118 589
- KR-A- 20120 096 696

## Beschreibung

Die Erfindung bezieht sich auf ein passives Füllstandsregelsystem mit den Merkmalen des Oberbegriffs von Anspruch 1.

Demnach beruht die Erfindung auf einem passiven Füllstandsregelsystem mit
- einem ein Medium aufnehmenden Behälter, wobei das Medium in dem Behälter während des Betriebes eine Flüssigphase und eine Dampfphase besitzt,
- einer an den Behälter angeschlossen Einspeiseleitung für das Medium, in die eine den Zustrom von dem Medium steuernde Regelarmatur und/oder eine Speisepumpe geschaltet ist,
- einem als kommunizierende Röhre an den Behälter angeschlossenen und von dem Medium durchströmbaren Standrohr, und
- einer thermisch an das Standrohr gekoppelten passiven Betätigungsvorrichtung für ein Pilotventil, welches die Regelarmatur und/oder die Speisepumpe ansteuert.

In Kernkraftwerken sind etliche mit Flüssigkeit gefüllte Behälter vorhanden, für die eine Füllstandsregelung verwirklicht werden muss, einerseits für den Normalbetrieb und andererseits für Störfallsituationen. Hierzu zählen beispielsweise der Reaktordruckbehälter eines Druck- oder Siedewasserreaktors oder die Dampferzeuger, die bei einem Druckwasserreaktor die thermische Schnittstelle zwischen dem Primärkühlkreislauf und dem Sekundärkühlkreislauf bilden.

Die bisherige normalbetriebliche Füllstandsregelung, z. B. für einen Dampferzeuger, wird klassisch durch eine aktive leittechnische Regelung aufgebaut und benötigt Füllstandssensoren, elektrische Leitungen, einen Prozessrechner mit Regelungssoftware und eine elektrische Stromversorgung.

Eine passive Füllstandsnachführung, insbesondere für Störfälle, war bislang durch passive pneumatische / hydraulische Impulsgeber möglich. Die Veröffentlichung Neumann D., "The passive safety systems of the SWR 1000", Proceedings of the 9th International Conference on Nuclear Engineering, ICONE-9, Nice, France, April 8-12, 2001 beschreibt zu diesem Zweck einen sogenannten Passive Pressure Pulse Transmitter (PPPT). Es handelt sich dabei im Prinzip um einen Wärmeübertrager, der primärseitig an den hinsichtlich seines Füllstandes zu überwachenden Behälter angeschlossen ist. Bei abgesenktem primärem Füllstand findet durch Wärmeübertrag auf die sekundäre Seite ein sekundärer Druckaufbau statt, mit dem ein Schaltsignal zur Füllstandsanhebung gebildet wird. Das Rücksetzen des durch den PPPT bei "Füllstand tief" ausgelösten Signals wird dann durch einen zweiten PPPT (mit zugehöriger Ausdehnungsschleife) bei "Füllstand hoch" vorgenommen. Somit werden zwei passive Impulsgeber mit zugehörigen Leitungen und Anschlüssen für eine Intervallregelung benötigt, was baulich aufwendig ist und relativ viel Platz erfordert.

Ein weiteres Füllstandsregelsystem für den Reaktordruckbehälter eines Kernreaktors ist aus der DE 32 10 745 A1 bekannt.

Der Erfindung liegt die Aufgabe zugrunde, ein passives Füllstandsregelsystem der eingangs genannten Art anzugeben, das bei geringerem baulichen Aufwand und Platzbedarf als bislang eine robuste, zuverlässige, schnell ansprechende und bedarfsgerechte Füllstandsregelung gewährleistet.

Diese Aufgabe wird erfindungsgemäß gelöst durch ein Füllstandsregelsystem mit den Merkmalen des Anspruchs 1.

Als erfindungswesentlich wird dabei angesehen, dass das Pilotventil ein elektrisch betätigtes Ventil ist, und dass die Betätigungsvorrichtung zumindest einen ersten thermoelektrischen Generator umfasst, der das Pilotventil mit einer vom Füllstand der Flüssigphase im Behälter abhängigen Betriebs- oder Betätigungsspannung speist.

Ein wesentlicher Beitrag der Erfindung liegt in der Nutzung des thermoelektrischen Wirkprinzips als Überwachungs- und Regelungsgröße einerseits und als Energiequelle andererseits. Zum einen wird nämlich der thermoelektrische Effekt, Wärme in elektrische Energie umzuwandeln zur Erkennung des Füllstandes und zur Auslösung einer Nachspeisung bei Unterschreiten eines Auslösewertes verwendet, und zum anderen erfolgt in Kombination dazu eine Bereitstellung von Hilfsenergie für einen zugeordneten Aktor, insbesondere zur Aktivierung eines Magnetventils. Die thermoelektrischen Generatoren sind somit Sensorik und Energieversorgung in einem. Das heißt, das System ist in sich autark und nicht auf Hilfssysteme angewiesen und damit zum Einsatz als Teil eines passiven Sicherheitssystems prädestiniert. Durch den fast vollständigen Verzicht auf mechanische Komponenten ist gegenüber den bisherigen Regelsystemen ein deutlicher Zugewinn in Hinsicht auf die betriebliche Sicherheit zu erwarten.

Auch gegenüber den bisherigen pneumatischen / hydraulischen Systemen vom Typ PPPT bestehen Vorteile. Ein PPPT nutzt nämlich den Wärmeeintrag für den sekundärseitigen Druckaufbau zur Ansteuerung eines Pilotventils. Hierzu muss diese Sekundärseite für die Betriebsbedingungen der Primärseite ausgelegt werden. Da das anzusteuernde System in der Regel nicht in direkter Nähe aufgebaut werden kann, ist weiterhin ein Pneumatiksystem zwischengeschaltet. Somit ist der Aufbau insgesamt relativ komplex. Das erfindungsgemäße System vereinfacht den Systemaufbau deutlich: Die Ansteuerung des Magnetventils erfolgt durch ein einfaches Elektrokabel, druckführende Rohrleitungen und zusätzliche Hilfssysteme werden nicht benötigt. Jedenfalls bietet die erfindungsgemäße Lösung im Vergleich zu einem PPPT eine diversitäre Alternative.

Vorteilhafte Ausgestaltungen der Erfindung und alternative Varianten sind Gegenstand der abhängigen Ansprüche sowie der nachfolgenden detaillierten Beschreibung in Verbindung mit den zugehörigen Zeichnungen.

Dabei zeigen in jeweils stark vereinfachter und schematischer Darstellung:
- FIG. 1: einen Längsschnitt durch einen Dampferzeuger als Beispiel für einen mit Flüssigkeit gefüllten Behälter mitsamt zugehörigen Komponenten für eine einfache passive Füllstandsregelung, wobei die zweigeteilte Darstellung in der linken Bildhälfte einen Zustand mit einem hohen Füllstand repräsentiert und in der rechten Bildhälfte einen Zustand mit niedrigem Füllstand,
- FIG. 2: eine Variante zu FIG. 1 mit einer etwas komplexeren Bereichsregelung für den Füllstand im Behälter,
- FIG. 3: ein Detail aus FIG. 1 oder 2 zur konstruktiven Verwirklichung wesentlicher Komponenten des Regelsystems, nämlich der Anbringung eines thermoelektrischen Generators an einem mit dem Behälter kommunizierenden Standrohr, und
- FIG. 4: einen Überblick über ein System zur passiven Notbespeisung eines Dampferzeugers als konkretes Anwendungsbeispiel für die beschriebene Technologie.

Gleiche Teile sind in allen Figuren mit denselben Bezugszeichen versehen.

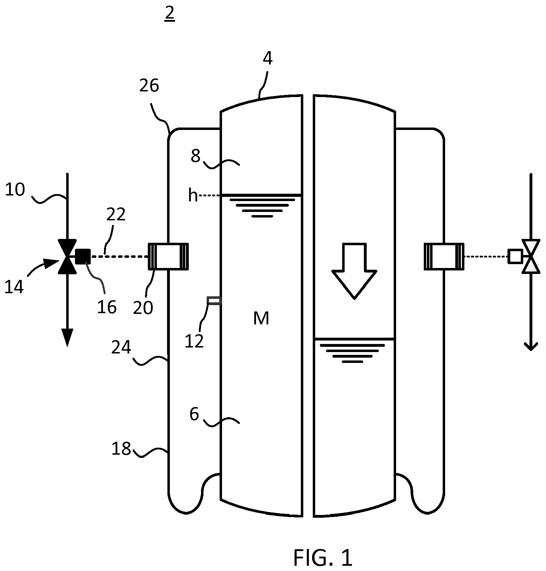

FIG. 1 zeigt einen schematischen Längsschnitt durch einen Dampferzeuger 2 eines Kernreaktors, beispielsweise vom Typ Europäischer Druckwasserreaktor (EPR). Der Dampferzeuger 2 weist einen druckdicht gegenüber der Umgebung geschlossenen Behälter 4 auf, in dem sich während des Betriebes ein fluides Medium M, hier im Wesentlichen Wasser, befindet. In einem unteren Teil des Behälters 4 befindet sich das Medium M im flüssigen Aggregatzustand, der Flüssigphase 6. Je nach vorliegenden Betriebsbedingungen verdampft ein Teil der Flüssigphase 6 und bildet im darüber liegenden Teil des Behälters 4 eine Dampfphase 8. In der linken Hälfte der Figur ist eine Situation mit einem relativ hohen Füllstand der Flüssigphase 6 im Behälter 4 dargestellt und in der rechten Hälfte - in quasi spiegelbildlicher Darstellung - eine Situation mit einem niedrigeren Füllstand.

Für einen sicheren Betrieb ist vorgesehen, dass der Füllstand bzw. Pegelstand (mit der Pegelhöhe h) der Flüssigphase 6 im Behälter 4 zumindest einen vorgegebenen minimalen Füllstand nicht unterschreitet und vorzugsweise einen vorgegebenen maximalen Füllstand nicht überschreitet, sich mit anderen Worten also innerhalb des dadurch definierten Bandes oder Intervalls bewegt. Im Falle absinkenden Füllstandes ist daher spätestens bei Erreichen des minimalen Füllstandes eine Nachspeisung bzw. Einspeisung von flüssigem Medium M über eine an den Behälter 4 angeschlossene Einspeiseleitung 10 vorgesehen. Der Anschluss 12 der nur ausschnittsweise dargestellten Einspeiseleitung 10 an den Behälter 4 ist lediglich in der linken Hälfte von FIG. 1 schematisch angedeutet. Die Bespeisung kann beispielsweise aus einem Reservoir mittels aktiver Pumpen oder auf passive Weise befolgen (z. B. durch geodätische Becken, Druckspeicher oder Dampfstrahlpumpen). Dadurch steigt der Füllstand wieder an. Bei Erreichen des maximalen Füllstandes ist die Einspeisung vorzugsweise wieder zu beenden.

Zur Einstellung des Durchflusses ist beispielsweise ein Regelventil / eine Regelarmatur 14 in die Einspeiseleitung 10 geschaltet. Es handelt sich im vorliegenden Fall bevorzugt um eine "Auf/Zu"-Armatur, die gewissermaßen in digitaler Weise zwischen den beiden Zuständen "Auf" und "Zu" (entsprechend maximalem oder keinem Durchfluss) hin- und herschaltet und somit den Start oder Stopp der Einspeisung bewirkt. Die Regelarmatur 14 wird im hier dargestellten Beispiel durch ein auch als Steuer- oder Vorsteuerventil bezeichnetes Pilotventil 16 angesteuert. Das Pilotventil 16 wiederum ist in ein passives Regelsystem eingebunden, dessen Aufbau und Funktionsweise nachfolgend genauer beschrieben werden.

Zur Realisierung der passiven Füllstandsregelung ist ein Standrohr 18 an den Behälter 4 angeschlossen und mit dessen Innenraum gemäß dem Prinzip kommunizierender Röhren strömungsmäßig verbunden. Das untere Ende des Standrohres 18 mündet unterhalb des minimalen Füllstandes, insbesondere in der Bodenregion, in die Flüssigphase 6 im Behälter 4. Zwischen dem unteren Anschluss des Standrohres 18 an den Behälter 4 und dem vertikalen Leitungsabschnitt des Standrohres 18 ist ein im hier dargestellten Beispiel U-förmiger Siphon angeordnet. Das obere Ende des Standrohres 18 mündet oberhalb des maximalen Füllstandes, insbesondere in der Deckenregion, in die Dampfphase 8 im Behälter 4. In einem zwischen dem oberen und dem unteren Anschluss liegenden Abschnitt verläuft das Standrohr 18 in vertikaler Ausrichtung. Da das Standrohr 18 frei durchströmbar ist, gleicht sich der Pegelstand der Flüssigphase im Standrohr 18 stets dem Pegelstand im Behälter 4 an. Aufgrund der im Standrohr herrschenden niedrigeren Temperatur des Mediums M ist der Pegelstand aber im Standrohr 18 gegenüber dem Behälter 4 abgesenkt. Bei der Feineinstellung der Regelbereiche ist daher eine entsprechende Korrektur zu berücksichtigen.

An das Standrohr 18 ist ein thermoelektrischer Generator (kurz: TEG) 20 thermisch angekoppelt, der bei Erwärmung eine thermoelektrische Spannung gemäß dem Seebeck-Effekt - und bei Einbindung in einen geschlossenen Stromkreis einen entsprechenden Thermostrom - erzeugt. Hierzu können im Prinzip handelsübliche thermoelektrische Elemente, insbesondere auf Halbleiterbasis, verwendet werden. Der so erzeugte Thermostrom wird zur Betätigung des als Magnetventil ausgebildeten Pilotventils 16 benutzt. Die zur Ausbildung eines Stromkreises erforderlichen elektrischen Leitungen 22 zwischen dem thermoelektrischen Generator 20 und dem Pilotventil 16 sind in der Figur nur schematisch angedeutet.

Das Pilotventil 16 weist typischerweise einen mit dem erzeugten Thermostrom beaufschlagten Elektromagneten als Hubmagnet auf, der bei Überschreiten einer kritischen Stromstärke einen Ventilkolben entgegen einer durch ein Federelement bewirkten Rückstellkraft aus der Ruhelage auslenkt. Somit wird bei hinreichender Beheizung des thermoelektrischen Generators 20 das Pilotventil 16 betätigt und dadurch die Regelarmatur 14.

Die Grundidee für die erfindungsgemäß verwirklichte Füllstandmessung lässt sich demnach wie folgt charakterisieren:
Der Füllstand wird gewissermaßen an dem "kalten" Standrohr 18 des Druckbehälters gemessen. Das heißt, die Flüssigkeitssäule 24 im Standrohr 18 ist relativ kalt, die darüber befindliche Dampfsäule 26 hingegen ist heiß. Wie weiter oben beschrieben, stellt sich daher ein geringerer Pegelstand im Standrohr 18 gegenüber dem Pegelstand im Behälter 4 ein.

Die Detektion der Flüssigkeitssäule 24 erfolgt über den anstehenden Wärmestrom zur Umgebung. Liegt der Pegel der Flüssigkeitssäule 24 im Standrohr 18 oberhalb der Einbauhöhe des thermoelektrischen Generators 20, so sind das Temperaturgefälle und der damit einhergehende Wärmestrom von der Flüssigkeitssäule 24 zur Umgebung und insbesondere zum thermoelektrischen Generator 20 gering. Es wird dann kein nennenswerter Thermostrom erzeugt. Bei abgesunkenem Pegelstand hingegen, wenn sich auf Einbauhöhe des thermoelektrischen Generators 20 die Dampfphase im Standrohr 18 befindet, ist der Wärmestrom entsprechend dem Temperaturgefälle (Sattdampftemperatur vs. Umgebungstemperatur) hoch. Bei anliegendem Wärmstrom, wenn also der Pegelstand der Flüssigphase im Standrohr 18 die durch die Einbauhöhe des thermoelektrischen Generators 20 definierte Füllstandsmarke unterscheitet, erzeugt der thermoelektrische Generator 20 einen elektrischen Strom, der für die Betätigung eines Aktors benutzt wird.

Für die (einfache) Füllstandregelung gemäß FIG. 1 wird der durch den thermoelektrischen Generator 20 erzeugte Thermostrom direkt zur Ansteuerung des als Magnetventil ausgebildeten Pilotventils 16 benutzt. Das Pilotventil 16 wiederrum dient als Vorsteuerarmatur oder -ventil der Regelarmatur 14, bei der es sich bevorzugt um eine eigenmedium-betätigte Absperrarmatur handelt. Sinkt der Pegelstand im Standrohr 18 unter die Einbauhöhe des thermoelektrischen Generators 20, so bewirkt der einsetzende Wärmestrom die Produktion von Thermostrom, was zur Betätigung des Pilotventils 16 und letztlich zur Öffnung der zuvor geschlossenen Regelarmatur 14 in der Einspeiseleitung 10 führt. Die Nachspeisung von Medium M in den Behälter 4 wird gestartet. Steigt der Pegelstand infolge der Nachspeisung wieder über die Einbauhöhe des thermoelektrischen Generators 20, so kommen der Wärmestrom und damit die Stromerzeugung zum Erliegen. Das Pilotventil 16 schließt wieder und mit ihrer die Hauptarmatur, hier also die Regelarmatur 14. Die Einspeisung wird unterbrochen. Solange noch Medium M zur Nachspeisung zur Verfügung steht, kann sich das Spiel beliebig oft wiederholen.

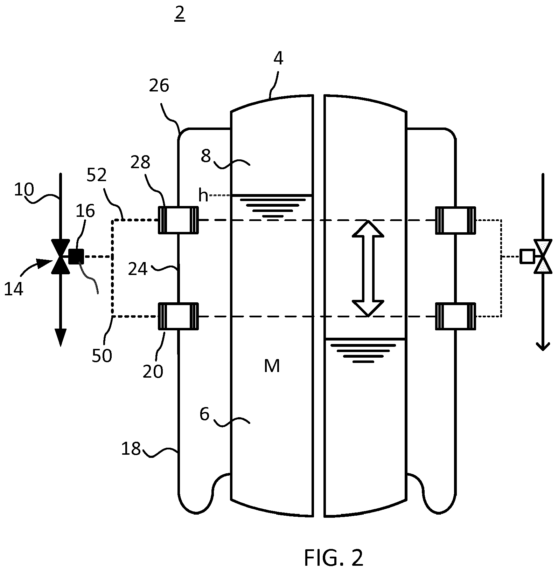

Für eine Bereichsregelung gemäß FIG. 2 werden zwei thermoelektrische Generatoren 20, 28 eingesetzt, die in unterschiedlicher Einbauhöhe thermisch an das Standrohr 18 angekoppelt sind.

Der untere thermoelektrische Generator 20 befindet sich auf Höhe des minimalen Pegelstandes (kurz: "Füllstand tief" oder "level low") und speist den auch als Betätigungsmagneten bezeichneten Hubmagneten des als Pilotventil 16 wirksamen Magnetventils. Wie bereits im Zusammenhang mit FIG. 1 beschrieben, handelt es sich dabei in bevorzugter Ausgestaltung um einen Elektromagneten, der bei Aktivierung den Ventilkegel des Magnetventils entgegen einer federbedingten Rückstellkraft aus der Ruhelage auslenkt.

Um den Ventilkegel in der ausgelenkten Stellung zu halten, selbst wenn der Betätigungsmagnet stromlos wird, weist das Magnetventil einen separaten Haltemagneten auf, der durch den oberen, auf Höhe des Höhe des maximalen Pegelstandes (kurz: "Füllstand hoch" oder "level high") befindlichen thermoelektrischen Generator 28 mit einem Thermostrom beaufschlagt wird. In der Regel ist die erforderliche Haltekraft in der ausgelenkten Stellung etwas geringer als die zur Auslenkung selbst erforderliche Kraft, so dass der zweite thermoelektrische Generator 28 weniger Strom liefern muss als der erste und entsprechend kleiner dimensioniert sein kann.

Sinkt der Füllstand unterhalb von "Füllstand tief", so wird wie bei der zuvor beschriebenen einfachen Regelung das Einspeisesystem aktiviert, indem der am ersten thermoelektrischen Generator 20 anliegende Wärmestrom zur Erzeugung von Thermostrom und somit zur Betätigung des Pilotventils 16 mittels des Hubmagneten führt. Durch den ebenfalls einem Wärmestrom ausgesetzten zweiten thermoelektrischen Generator 28 ist der Haltemagnet des Pilotventils 16 (schon) aktiviert, der das Magnetventil nach dem Öffnungsvorgang weiterhin offen hält (jedoch das Magnetventil alleine nicht öffnen kann). Die Einspeisung bzw. Nachspeisung von Medium M in den Behälter 4 startet. Steigt der Füllstand wieder über "Füllstand tief", so wird der Hubmagnet des Magnetventils stromlos, jedoch wird es durch den Haltemagnet, der über den zweiten thermoelektrischen Generator 28 mit Thermostrom gespeist wird, weiter offen gehalten. Die Einspeisung bleibt vorerst aktiv. Erst wenn der Füllstand die Marke "Füllstand hoch" erreicht, so sind beide thermoelektrischen Generatoren 20, 28 stromlos und das Pilotventil 16 schließt infolge der Federrückstellkraft. Das durch das Pilotventil 16 gesteuerte Hauptventil, hier also die Regelarmatur 14, schließt und die Einspeisung von Medium M in den Behälter 4 stoppt.

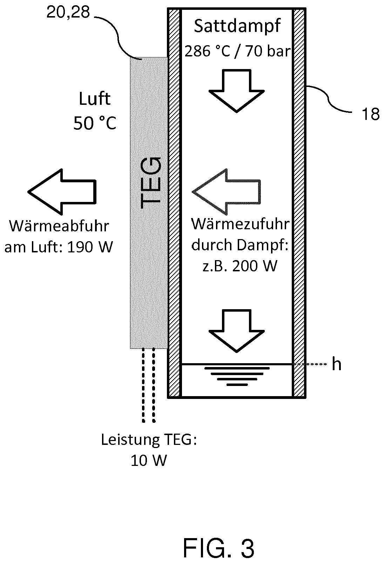

FIG. 3 zeigt schematisch ein Detail der technischen Umsetzung, nämlich die Anbringung des jeweiligen thermoelektrischen Generators 20 oder 28 am Standrohr 18. Im gezeigten Beispiel besitzt die Dampfphase (Sattdampf) innerhalb des ausschnittsweise im Längsschnitt dargestellten Standrohres 18 mit Nennweite DN40 eine Temperatur von 286 °C (Sättigungstemperatur bei 70 bar Systemdruck). Der Wärmestrom an die Umgebung besitzt innerhalb eines Oberflächenabschnitts der Rohrwand von 15 x 4 cm eine Leistung von rund 200 W. Davon nimmt der nach Art einer Manschette am Umfang der Rohrwand anliegende thermoelektrische Generator 20 oder 28 bei einem thermischen Wirkungsgrad von 5 % eine Zielleistung von etwa 10 W auf, die in elektrische Leistung umgesetzt wird. Die restlichen 190 W werden von der umgebenden Luft, die eine Temperatur von rund 50 °C aufweist, aufgenommen. Wenn die Flüssigphase im Standrohr 18 eine an die Umgebung angeglichene Temperatur von etwa 50 °C besitzt, dann ist bei der genannten Dampftemperatur eine Auslösezeit von einigen Sekunden zu erwarten, wenn der Füllstand der Flüssigphase unter die Einbauhöhe des thermoelektrischen Generators 20 oder 28 sinkt. Dies alles sind natürlich rein beispielhafte Werte, die lediglich ein Gefühl für die Größenordnungen der beteiligten thermodynamischen Größen vermitteln sollen. In der Praxis wird die Größe des thermoelektrischen Generators 20 oder 28 auf den Leistungsbedarf des angeschlossenen Magnetventils und die benötige Reaktionszeit abgestimmt.

Im Ergebnis ist durch die beschriebenen Maßnahmen ein passives thermoelektrisches Füllstandsregelsystem für einen Behälter verwirklicht, welches automatisch und ohne weitere Hilfsenergie ab einem festgelegten unteren Füllstandsgrenzwert bzw. Auslösewert eine Regelarmatur öffnet (oder eine sonstige Vorrichtung zur Anhebung des Füllstandes betätigt). Nach einsetzender Bespeisung und wieder ansteigendem Füllstand schließt das Füllstandsregelsystem automatisch die Regelarmatur bei Erreichen oder Überschreiten des oberen Füllstandsgrenzwertes.

Auch wenn in den meisten Anwendungsfällen die beschriebene Anordnung des thermoelektrischen Generators an einem parallel zum Behälter verlaufenden, vertikal ausgerichteten Standrohr besonders zweckmäßig sein dürfte, so sind doch davon abweichende Ausgestaltungen möglich. Bei Vorhandensein von zwei thermoelektrischen Generatoren für eine Bereichsregelung brauchen diese nicht am selben Standrohr angebracht zu sein, sondern können - in unterschiedlichen Höhen - auf zwei verschiedene Standrohre verteilt sein.

Weiterhin ist es denkbar, etwa bei Dampfdruckspeichern oder Schichtspeichern, auf das Standrohr komplett zu verzichten und stattdessen den jeweiligen thermoelektrischen Generator direkt im Behälter zu platzieren. Bei Druckbehältern von Siedewasserreaktoren oder Dampferzeugern von Druckwasserreaktoren wird jedoch im Allgemeinen das "kalte" Standrohr benötigt, da im Behälter selber beide Phasen in Sättigung vorliegen, d. h. keine Temperaturunterschiede bestehen

Unter Umständen kann anstelle der zweistufigen Ventilanordnung bestehend aus Pilotventil (Vorsteuerventil) und Regelarmatur (Hauptarmatur) ein einstufiges, elektrisch betätigtes Ventil, insbesondere ein Magnetventil, als Stromregelventil vorhanden sein, welches - je nach Regelanforderung - durch einen oder zwei thermoelektrische Generatoren angetrieben / betätigt wird.

Alternativ kann das thermoelektrisch angesteuerte Magnetventil auch für die Steuerung eines Pneumatiksystems oder Hydrauliksystems eingesetzt werden, welches konzeptionell mit der Leistungsklasse des Magnetventils (typischerweise ca. < 10 bis 50 W) kompatibel sein muss.

Eine besonders vorteilhafte Anwendung des beschriebenen passiven Füllstandsregelsystems besteht im Zusammenhang mit Notfallbespeisung eines Dampferzeugers in einem Druckwasserreaktor, insbesondere in Kombination mit einer dampfbetriebenen Einspeisepumpe. Durch eine derartige Kombination können Ereignisse wie z. B. Station Blackout rein passiv beherrscht werden. Des Weiteren ist eine Verwendung bei der Notfallkühlung eines Reaktordruckbehälters möglich. Davon unabhängig ist solch ein passiver Füllstandsregler natürlich auch für andere Anwendungen in der nuklearen und konventionellen Kraftwerkstechnik einsetzbar.

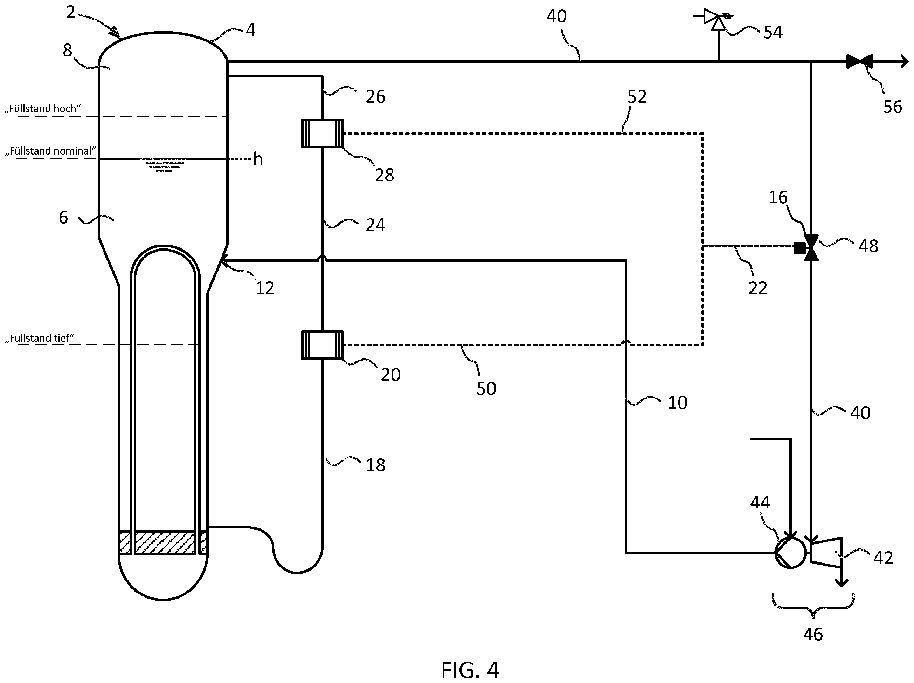

FIG. 4 zeigt ein konkretes Anwendungsszenario der im Zusammenhang mit FIG. 2 beschriebenen Bereichsregelung bei einem Dampferzeuger 2. Hierbei ist in der Deckenregion des Behälters 4, also an den Dampfraum mit der Dampfphase 8 , eine Dampfentnahmeleitung oder kurz Dampfleitung 40 angeschlossen, von der eine Zweigleitung zu einer Dampfturbine 42 führt (das Entlastungsventil 54 und das Isolierventil 56 sind im hier beschriebenen Zusammenhang nicht von Interesse). Die Dampfturbine 42 treibt eine in die Einspeiseleitung 10 geschaltete Speisepumpe 44 an und bildet mit ihr gemeinsam eine dampfbetriebene Pumpe 46 zur Förderung von Medium M in den Behälter 4. Selbstverständlich sind für die dampfbetriebene Pumpe 46 auch andere Ausführungen möglich, etwa als Dampfstrahlpumpe. Über das in die Dampfleitung 40 geschaltete Regelventil 48 wird der Zustrom von Dampf zu der dampfbetriebenen Pumpe 46 und damit der Zustrom von Medium M in den Behälter 4 im Sinne einer "Auf/Zu"-Einstellung reguliert, also an oder ausgeschaltet. Das Regelventil 48 wird dazu durch das als Magnetventil ausgebildete Pilotventil 16 angesteuert.

Das Pilotventil 16 wird seinerseits wie bereits beschrieben durch zwei an das Standrohr 18 thermisch angekoppelte thermoelektrische Generatoren 20, 28 angesteuert, die eine Bereichsregelung zwischen "Füllstand hoch" und "Füllstand tief" verwirklichen. Über die elektrische Leitung 50 wird das vom ersten thermoelektrischen Generator 20 erzeugte Hub- oder Betätigungssignal an das Pilotventil 16 übermittelt und über die elektrische Leitung 52 das vom zweiten thermoelektrischen Generator 28 erzeugte Haltesignal. Im Übrigen wird auf die Beschreibung zu FIG. 2 verwiesen. Im Ergebnis wird durch die thermoelektrischen Generatoren 20, 28 über das Pilotventil 16 das Regelventil 48 in der Dampfleitung 40 und dadurch (indirekt) die dampfbetriebene Pumpe 46 / die Speisepumpe 44 angesteuert.

Auch hier ist es möglich, anstelle der zweistufigen Ventilkombination aus Pilotventil 16 und Regelventil 48 ein einstufiges Regelventil zu verwenden, welches der Einfachheit halber ebenfalls als Pilotventil bezeichnet werden kann. Mit anderen Worten ist die Bezeichnung "Pilotventil" hier in einem weiten Sinne zu verstehen und umfasst auch einstufige Ventile, die unmittelbar den Fluss des Mediums M oder des Betriebsdampfes für eine dampfbetriebene Pumpe oder dergleichen steuern.

### Bezugszeichenliste

- 2: Dampferzeuger
- 4: Behälter
- 6: Flüssigphase
- 8: Dampfphase
- 10: Einspeiseleitung
- 12: Anschluss
- 14: Regelarmatur
- 16: Pilotventil
- 18: Standrohr
- 20: thermoelektrischer Generator
- 22: Leitung
- 24: Flüssigkeitssäule
- 26: Dampfsäule
- 28: thermoelektrischer Generator
- 40: Dampfleitung
- 42: Dampfturbine
- 44: Speisepumpe
- 46: dampfbetriebene Pumpe
- 48: Regelventil
- 50: Leitung
- 52: Leitung
- 54: Entlastungsventil
- 56: Isolierventil

- h: aktuelle Pegelhöhe
- M: Medium

## Patentansprüche

1. Passives Füllstandsregelsystem, mit
• einem ein Medium (M) aufnehmenden Behälter (4), wobei das Medium (M) in dem Behälter (4) während des Betriebes eine Flüssigphase (6) und eine Dampfphase (8) besitzt,
• einer an den Behälter (4) angeschlossen Einspeiseleitung (10) für das Medium (M), in die eine den Zustrom von dem Medium (M) steuernde Regelarmatur (14) und/oder eine Speisepumpe (44) geschaltet ist,
• einem als kommunizierende Röhre an den Behälter (4) angeschlossenen und von dem Medium (M) durchströmbaren Standrohr (18), und
• einer thermisch an das Standrohr (18) gekoppelten passiven Betätigungsvorrichtung für ein Pilotventil (16), welches die Regelarmatur (14) und/oder die Speisepumpe (44) ansteuert,
wobei das Pilotventil (16) ein elektrisch betätigtes Ventil ist, und dass die Betätigungsvorrichtung zumindest einen ersten thermoelektrischen Generator (20) umfasst, der das Pilotventil (16) mit einer vom Füllstand der Flüssigphase (6) im Behälter (4) abhängigen Betriebsspannung speist,
**dadurch gekennzeichnet, dass**
der Behälter (4) ein Dampferzeuger (2) oder ein Reaktordruckbehälter eines Kernreaktors ist.

2. Füllstandsregelsystem nach Anspruch 1, die derart konfiguriert ist, dass ein Zustrom von dem Medium (M) einsetzt, sobald der Füllstand der Flüssigphase (6) im Behälter (4) unter die Einbauhöhe des ersten thermoelektrischen Generators (20) sinkt.

3. Füllstandsregelsystem nach Anspruch 1 oder 2, wobei das Pilotventil (16) ein Magnetventil ist.

4. Füllstandsregelsystem nach Anspruch 3, wobei die Betätigungsvorrichtung einen zweiten thermoelektrischem Generator (28) umfasst, der derart thermisch an das Standrohr (18) angekoppelt ist und zusammen mit dem ersten thermoelektrischen Generator (20) auf das Pilotventil (16) einwirkt, dass eine Bereichsregelung für den Füllstand der Flüssigphase (6) im Behälter (4) verwirklicht ist.

5. Füllstandsregelsystem nach Anspruch 4, wobei das Pilotventil (16) einen Betätigungsmagneten und einen Haltemagneten aufweist, und wobei der erste thermoelektrische Generator (20) den Betätigungsmagneten und der zweite thermoelektrische Generator (28) den Haltemagneten mit einer zugehörigen Spannung speist.

6. Füllstandsregelsystem nach einem der vorherigen Ansprüche, wobei der jeweilige thermoelektrische Generator (20, 28) das Standrohr (18) zumindest teilweise nach Art einer Manschette umgreift.

7. Kernreaktor mit einem Dampferzeuger (2) oder einem Reaktordruckbehälter und mit einem zugehörigen Füllstandsregelsystem nach einem der vorherigen Ansprüche.

8. Kernreaktor nach Anspruch 7, wobei eine dampfbetriebene Pumpe (46), an die eine Dampfleitung (40) zur Versorgung mit Betriebsdampf angeschlossen ist, in die Einspeiseleitung (10) geschaltet ist, und wobei das Pilotventil (16) den Zustrom von Betriebsdampf durch die Dampfleitung (40) steuert.

9. Kernreaktor nach Anspruch 8, wobei die Dampfleitung (40) derart an den Behälter (4) angeschlossen ist, dass während des Betriebes der Betriebsdampf für die dampfbetriebene Pumpe (46) durch die Dampfphase (8) im Behälter (4) bereitgestellt wird.

## Claims

1. A passive fill-level control system, having
• a container (4) receiving a medium (M), wherein the medium (M) in the container (4) has a liquid phase (6) and a steam phase (8) during operation,
• a feed line (10) for the medium (M) connected to the container (4), into which feed line a control valve (14) controlling the inflow of the medium (M) and/or a feed pump (44) is connected,
• a standpipe (18) which is connected as a communicating pipe to the container (4) and through which the medium (M) can flow, and
• a passive actuator for the pilot valve (16) coupled thermally to the standpipe (18), which pilot valve actuates the control valve (14) and/or the feed pump (44),
wherein the pilot valve (16) is an electrically actuated valve, and that the actuator comprises at least a first thermoelectric generator (20), which feeds the pilot valve (16) with an operating voltage dependent on the fill level of the liquid phase (6) in the container (4),
**characterized in that**
the container (4) is a steam generator (2) or a reactor pressure container of a nuclear reactor.

2. The fill-level control system according to Claim 1, which is configured in such a manner that an inflow of the medium (M) starts, as soon as the fill level of the liquid phase (6) in the container (4) drops below the installation height of the first thermoelectric generator (20).

3. The fill-level control system according to Claim 1 or 2, wherein the pilot valve (16) is a magnetic valve.

4. The fill-level control system according to Claim 3, wherein the actuator comprises a second thermoelectric generator (28), which is thermally coupled to the standpipe (18) and acts together with the first thermoelectric generator (20) on the pilot valve (16) in such a manner that a range control for the fill-level of the liquid phase (6) in the container (4) is realized.

5. The fill-level control system according to Claim 4, wherein the pilot valve (16) has an actuating magnet and a holding magnet, and wherein the first thermoelectric generator (20) feeds the actuating magnet and the second thermoelectric generator (28) feeds the holding magnet with an associated voltage.

6. The fill-level control system according to any one of the preceding claims, wherein the respective thermoelectric generator (20, 28) engages around the standpipe (18) at least partially in the manner of a sleeve.

7. A nuclear reactor having a steam generator (2) or a reactor pressure container and having an associated fill-level control system according to any one of the preceding claims.

8. The nuclear reactor according to Claim 7, wherein the steam-driven pump (46), to which a steam line (40) is connected for the supply with operating steam, is connected into the feed line (10), and wherein the pilot valve (16) controls the inflow of operating steam through the steam line (40).

9. The nuclear reactor according to Claim 8, wherein the steam line (40) is connected to the container (4) in such a manner that during operation the operating steam is provided for the steam-driven pump (46) by the steam phase (8) in the container (4).

## Revendications

1. Système de régulation de niveau de remplissage passif, avec
• un récipient (4) contenant un fluide (M), le fluide (M) dans le récipient (4) présentant, pendant le fonctionnement, une phase liquide (6) et une phase vapeur (8),
• une conduite d'alimentation (10) raccordé au récipient (4) pour le fluide (M), dans laquelle est branchée une robinetterie de régulation (14) et/ou une pompe d'alimentation (44) contrôlant l'afflux du fluide (M),
• un tube vertical (18) raccordé, en tant que tuyau de communication, au récipient (4) et pouvant être traversé par le fluide (M) et
• un dispositif d'actionnement passif couplé thermiquement au tube vertical (18), pour une vanne pilote (16) qui contrôle la robinetterie de régulation (14) et/ou la pompe d'alimentation (44),
la vanne pilote (16) étant une électrovanne et en ce que le dispositif d'actionnement comprend au moins un premier générateur thermoélectrique (20) qui alimente la vanne pilote (16) avec une tension de service qui dépend du niveau de remplissage de la phase liquide (6) dans le récipient (4),
**caractérisé en ce que**
le récipient (4) est un générateur de vapeur (2) ou un récipient sous pression de réacteur d'un réacteur nucléaire.

2. Système de régulation de niveau de remplissage selon la revendication 1, qui est configuré de façon à ce qu'un afflux de fluide (M) survient dès que le niveau de remplissage de la phase liquide (6) dans le récipient (4) diminue en dessous de la hauteur du premier générateur thermoélectrique (20).

3. Système de régulation de niveau de remplissage selon la revendication 1 ou 2, la vanne pilote (16) étant une vanne magnétique.

4. Système de régulation de niveau de remplissage selon la revendication 3, le dispositif d'actionnement comprenant un deuxième générateur thermoélectrique (28) qui est couplé thermiquement au tube vertical (18) et qui agit, conjointement avec le premier générateur thermoélectrique (20), sur la vanne pilote (16), de façon à ce qu'une régulation de zone soit réalisée pour le niveau de remplissage de la phase liquide (6) dans le récipient (4).

5. Système de régulation de niveau de remplissage selon la revendication 4, la vanne pilote (16) comprenant un aimant d'actionnement et aimant de maintien et le premier générateur thermoélectrique (20) alimentant l'aimant d'actionnement et le deuxième générateur thermoélectrique (28) alimentant l'aimant de maintien avec une tension correspondante.

6. Système de régulation de niveau de remplissage selon l'une des revendications précédentes, le générateur thermoélectrique (20, 28) correspondant entourant le tube vertical (18) au moins partiellement à la manière d'un manchon.

7. Réacteur nucléaire avec un générateur de vapeur (2) ou récipient sous pression de réacteur et avec un système de régulation de niveau de remplissage correspondant selon l'une des revendications précédentes.

8. Réacteur nucléaire selon la revendication 7, une pompe actionnée par la vapeur (46), à laquelle est raccordée une conduite de vapeur (40) pour l'alimentation en vapeur de fonctionnement, étant branchée dans la conduite d'alimentation (10) et la vanne pilote (16) contrôlant l'afflux de vapeur de fonctionnement à travers la conduite de vapeur (40).

9. Réacteur nucléaire selon la revendication 8, la conduite de vapeur (40) étant raccordée au récipient (4) de façon à ce que, pendant le fonctionnement, la vapeur de fonctionnement est mise à disposition pour la pompe actionnée par la vapeur (46) par la phase vapeur (8) dans le récipient (4).
